# FASCICULE DE BREVET EUROPEEN

(11) **EP 3 065 956 B1**
(45) Date de publication et mention de la délivrance du brevet: **08.07.2020**
(21) Numéro de dépôt: 14802332.8
(22) Date de dépôt: 05.11.2014
(51) Int. Cl.: B60C 11/03, B60C 11/04, B60C 11/12

(54) **BANDE DE ROULEMENT COMPORTANT UN BLOC PRESENTANT UNE PLURALITE D'INCISIONS**
REIFENLAUFSTREIFEN MIT MEHREREN EINSCHNITTEN
TIRE TREAD WITH A BLOCK WITH MULTIPLE SIPES

(30) Priorité: 05.11.2013 FR 1360824
(43) Date de publication de la demande: 14.09.2016
(73) Titulaire: Compagnie Générale des Etablissements Michelin, 63000 Clermont-Ferrand (FR)
(72) Inventeur: BONNAMOUR, Matthieu, 63040 Clermont-Ferrand Cedex 9 (FR); DURAND-GASSELIN, Benoit, 63040 Clermont-Ferrand Cedex 9 (FR); LEFEBVRE, Serge, 63040 Clermont-Ferrand Cedex 9 (FR); VANDAELE, Mathieu, 63040 Clermont-Ferrand Cedex 9 (FR); YOKOKAWA, Kazutaka, 63040 Clermont-Ferrand Cedex 9 (FR); NOMURA, Masayoshi, 63040 Clermont-Ferrand Cedex 9 (FR)
(74) Mandataire: Demaure, Pierre-Yves
(86) Numéro de dépôt international: PCT/EP2014/073791
(87) Numéro de publication internationale: WO 2015/067644

(56) Documents cités:
- EP-A2- 0 369 932
- US-A- 2 821 231
- US-A- 5 924 464
- US-A1- 2013 061 992

## Description

### DOMAINE DE L'INVENTION

La présente invention concerne une bande de roulement d'un pneumatique pour véhicule automobile comportant un bloc en matériau caoutchoutique dont la longueur est très supérieure à la largeur, plus particulièrement, l'invention concerne une bande de roulement comportant un bloc présentant une pluralité d'incisions.

### ETAT DE LA TECHNIQUE

Le document FR759592 divulgue l'utilisation d'incisions dans une bande de roulement d'un pneumatique en vue d'augmenter l'adhérence de ce pneumatique. En effet, l'utilisation d'incisions permet d'augmenter le nombre d'arêtes sur la surface de roulement de la bande de roulement ce qui favorise, notamment, l'adhérence sur un sol mouillé. Par incisions, on entend une découpure dans la bande de roulement délimitant des parois de matière, la largeur de cette découpure est appropriée pour permettre la mise en contact au moins partielle de ces parois de matière lors du passage dans l'aire de contact du pneumatique avec le sol. La largeur d'une incision est, ainsi, au plus égale à 2 millimètres (mm).

Le document FR43383 additionnel au document FR759592 divulgue, l'utilisation d'incisions obliques. Les incisions obliques délimitent des sous-blocs en matériau caoutchoutique. Or en fonction de la largeur de ces sous-blocs, c'est-à-dire en fonction de la distance entre deux incisions obliques adjacentes, la résistance à l'usure de ces sous-blocs est plus ou moins importante. En outre, l'utilisation d'incisions obliques dans la bande de roulement peut entraîner la génération de bruits supplémentaires lors des roulages. Le document EP0369932 divulgue une bande de roulement comprenant des blocs allongés comportant des incisions qui se succèdent dans la longueur de ce bloc allongé.

Il existe donc un besoin de proposer une bande de roulement présentant, sur tout ou partie de cette bande de roulement, une pluralité d'incisions obliques dont les règles de répartition optimisent la résistance à l'usure de cette bande de roulement tout en limitant les risques de génération de bruit au roulage.

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « bloc » sur une bande de roulement, on entend un élément en relief délimité par des rainures et comprenant des parois latérales et une face de contact, cette dernière étant destinée à venir en contact avec le sol au cours d'un roulage.

Par « rainure », on entend une découpure dans la bande de roulement délimitant des parois de matière, la largeur de cette découpure est telle que les parois associées à cette découpure ne peuvent pas venir en contact l'une contre l'autre dans des conditions usuelles de roulage. La largeur pour une rainure est supérieure à 2 millimètres.

Par « incision », on entend une découpure dans la bande de roulement délimitant des parois de matière, la largeur de cette découpure est appropriée pour permettre la mise en contact, au moins partielle, des parois de l'incision lors du passage dans l'aire de contact entre le pneumatique et le sol. La largeur pour une incision est inférieure ou égale à 2 millimètres.

Par « direction axiale », on entend une direction parallèle à l'axe de rotation du pneu.

Par « direction circonférentielle », on entend une direction qui est tangente à tout cercle centré sur l'axe de rotation. Cette direction est perpendiculaire à la direction axiale.

Par « direction oblique », on entend une direction qui possède une composante axiale et une composante circonférentielle non nulles.

### RESUME DE L'INVENTION

L'invention concerne une bande de roulement selon la revendication 1.

L'invention propose ainsi de maintenir une certaine distance entre deux incisions adjacentes, de sorte à ce que la taille du sous-bloc délimité par ces deux incisions soit suffisamment importante pour lui conférer une bonne rigidité. On limite ainsi les risques d'arrachement des sous-blocs au cours des roulages.

L'invention propose, en outre, d'organiser les incisions de sorte à ce que lorsqu'on projette les incisions selon une direction circonférentielle, le chevauchement de ces incisions est limité. Chaque incision participe ici aux performances d'adhérence du pneumatique notamment lors de freinages en virage sur un sol mouillé. Si des incisions obliques se chevauchent selon la direction circonférentielle, l'effort de freinage serait repris par ces deux incisions dans leur zone de chevauchement. L'usure des sous-blocs associés à ces deux incisions est alors modifiée dans cette zone de chevauchement puisque l'effort de freinage est réparti entre ces deux sous-blocs. En revanche, dans les zones où il n'y a pas de chevauchement, une seule incision oblique reprend l'ensemble de ces efforts. L'usure de chaque sous-bloc est alors variable selon que les incisions obliques associées sont en chevauchement ou pas avec d'autres incisions obliques. En prévoyant de limiter le chevauchement des incisions obliques, on s'assure que l'usure des sous-blocs dans le bloc allongé est globalement uniforme. La pérennité du pneumatique est alors améliorée.

Enfin, les sous-blocs présentant des dimensions différentes dans la bande de roulement, on améliore ainsi le brouillage du signal sonore émis par la sculpture du pneumatique et on diminue en conséquence les émergences remarquables du spectre du bruit de la bande de roulement.

Les incisions sont rectilignes sur la surface de contact du bloc allongé et chaque incision fait un angle α avec une direction transversale. Au moins trois incisions du bloc allongé présentent des valeurs d'angle α différentes.

On constitue ainsi des sous-blocs de dimensions différentes de manière simple et pratique, et ceci en choisissant de manière adaptée l'angle α pour chaque incisions.

Dans une autre variante de réalisation ne faisant pas partie de l'invention, les incisions sont courbes sur la surface de contact du bloc allongé, chaque incision ayant une courbure C. Au moins deux incisions du bloc allongé présentent des valeurs d'angle α différentes.

En utilisant des incisions de courbure C, on améliore l'esthétisme global de la bande de roulement tout en limitant le bruit généré par le pneumatique.

Dans une autre variante de réalisation, les incisions sont partiellement ou totalement chanfreinées sur la surface de contact du bloc.

On améliore ainsi les performances du pneumatique en freinage sur un sol sec.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :

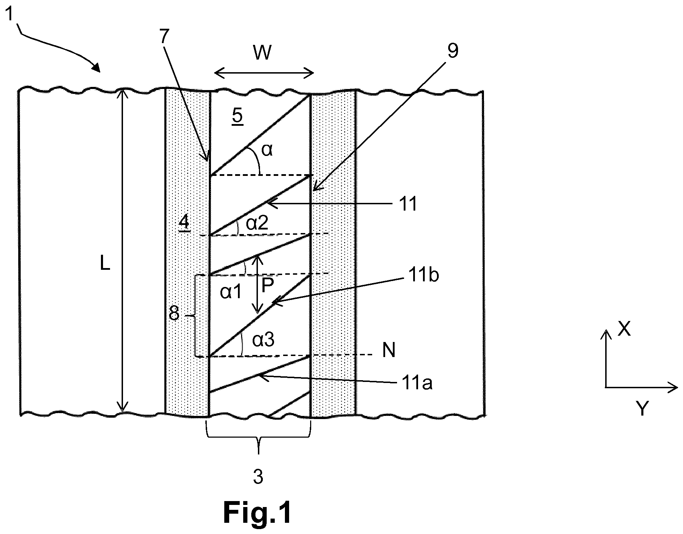

- la **figure 1** représente schématiquement une vue partielle d'une bande de roulement, selon un premier mode de réalisation de l'invention.

Dans la description qui va suivre, des éléments sensiblement identiques ou similaires seront désignés par des références identiques.

La **figure 1** représente une vue partielle d'une bande de roulement 1 d'un pneumatique selon un premier mode de réalisation de l'invention.

La bande de roulement 1 comporte au moins un bloc allongé 3 en matériau caoutchoutique. Le bloc allongé 3 est ici délimité par deux rainures 4 qui ont été ici grisées sur la **figure 1** pour favoriser la compréhension de l'invention. Le bloc allongé 3 présente une largeur W et une longueur L, cette longueur L étant très supérieure à la largeur W. Par très supérieure, on entend que la longueur L est au moins égale à 5 fois la largeur W. De cette manière, lorsque la bande de roulement 1 est montée sur un pneumatique, le bloc allongé 3 a l'allure d'une bande s'étendant selon une direction circonférentielle X. Cette bande peut s'étendre sur toute la circonférence du pneumatique. En variante, cette bande s'étend sur une partie seulement de cette circonférence.

De plus, le bloc allongé 3 comporte une surface de contact 5 destinée à venir en contact avec un sol et une première paroi latérale 7 et une seconde paroi latérale 9 délimitant cette surface de contact 5. En outre, le bloc allongé 3 comporte une pluralité d'incisions 11, 11a, 11b débouchant sur la surface de contact 5. Chaque incision s'étend selon une direction oblique en débouchant sur la première paroi latérale 7 et sur la seconde paroi latérale 9. Les incisions du bloc allongé sont ici orientées globalement dans une même direction, c'est-à-dire que les incisions s'étendent de la première paroi latérale 7 vers la seconde paroi latérale 9 selon un sens positif en X et en Y. Ces incisions sont réparties sur la surface de contact 5 du bloc allongé 3 de sorte que lorsqu'une incision 11a atteint la seconde paroi latérale 9, une autre incision 11b débute à partir de la première paroi latérale 7, au même niveau N sur le bloc allongé 3. Par « au même niveau N » sur le bloc allongé 3, on entend une position circonférentielle déterminée sur ce bloc allongé. Ainsi, la position circonférentielle atteinte par l'incision 11a sur la seconde paroi latérale 9 est la même que la position circonférentielle atteinte par l'incision 11b sur la première paroi latérale 7. En outre par « au même niveau », on entend qu'il peut exister un faible décalage entre la position circonférentielle des incisions 11a, 11b. Ce décalage est cependant limité. Il est de manière préférentielle inférieur à 5 % du pas P du sous-bloc 8 délimité par les deux incisions 1 la et 11b. Pour évaluer la présence ou non d'un tel décalage, on utilisera la notion de fibre neutre associée à chaque incision.

Plus particulièrement, dans le mode de réalisation de la **figure 1****,** les incisions sont rectilignes sur la surface de contact du bloc allongé. Chaque incision forme un angle α avec la direction circonférentielle Y. Cet angle α varie dans la direction circonférentielle X du pneumatique. Cet angle prend ici trois valeurs α1, α2, α3 avec a1< α2< α3, ces valeurs α1, α2, α3 étant comprises entre 20° et 70°.

On notera que la forme des sous-blocs 8 est ici globalement trapézoïdale avec deux côtés parallèles et deux côtés non parallèles. Chaque sous-bloc présente un pas P correspondant à une distance moyenne déterminée entre les deux côtés non parallèles du sous-bloc 8. Du fait de la variation des valeurs de l'angle α le long de la circonférence du pneumatique, au moins deux des sous-blocs 8 présentent, sur la **figure 1****,** des valeurs de pas P différentes et donc des configurations différentes.

Dans un autre mode de réalisation les incisions 11 sont partiellement ou totalement chanfreinées sur la surface de contact 5 du bloc allongé 3.

L'invention n'est pas limitée aux exemples décrits et représentés et diverses modifications peuvent y être apportées sans sortir de son cadre défini par les revendications ci-jointes.

## Revendications

1. Bande de roulement pour pneumatique comportant au moins un bloc (3) allongé en matériau caoutchoutique de largeur W et de longueur L avec L»W, ce bloc allongé s'étendant selon une direction circonférentielle (X) lorsque la bande de roulement (1) est montée sur le pneumatique, le bloc allongé (3) comportant une surface de contact (5) destinée à venir en contact avec un sol et une première paroi latérale (7) et une seconde paroi latérale (9) délimitant cette surface de contact (5), le bloc allongé (3) comportant une pluralité d'incisions (11, 11a, 11b) débouchant sur la surface de contact (5) du bloc allongé, chaque incision (11) s'étendant selon une direction oblique en débouchant sur la première paroi latérale (7) et sur la seconde paroi latérale (9), **caractérisée en ce que** les incisions (11) sont réparties sur la surface de contact (5) du bloc de sorte que lorsqu'une incision (11a) atteint la seconde paroi latérale (9) une autre incision (11b) circonférentiellement adjacente à ladite incision (11a) débute à partir de la première paroi latérale (7), à un même niveau (N) circonférentiel sur le bloc allongé (3) et **en ce que,** les incisions (11, 11a, 11b) délimitant des sous-blocs (8) dans le bloc allongé (3), au moins deux de ces sous-blocs (8) sont configurés de manière différente dans la bande de roulement et **en ce que** les incisions (11, 11a, 11b) sont rectilignes sur la surface de contact (5) du bloc allongé (3), chaque incision faisant un angle α avec une direction transversale (Y) **et en ce qu'**au moins trois incisions du bloc allongé (3) présentent des valeurs d'angle α1, α2, α3, différentes, ces valeurs α1, α2, α3 étant comprises entre 20° et 70°.

2. Bande de roulement selon la revendication 1, **caractérisée en ce que** les incisions (11) sont partiellement ou totalement chanfreinées sur la surface de contact (5) du bloc (3).

## Patentansprüche

1. Laufstreifen für einen Reifen, der mindestens einen langgestreckten Block (3) aus Kautschukmaterial mit einer Breite W und einer Länge L bei L»W aufweist, wobei sich dieser langgestreckte Block in einer Umfangsrichtung (X) erstreckt, wenn der Laufstreifen (1) auf dem Reifen angebracht ist, wobei der langgestreckte Block (3) eine Kontaktfläche (5), die dazu bestimmt ist, mit einem Boden in Kontakt zu kommen, und eine erste Seitenwand (7) und eine zweite Seitenwand (9), die diese Kontaktfläche (5) begrenzen, aufweist, wobei der langgestreckte Block (3) mehrere Einschnitte (11, 11a, 11b) aufweist, die in der Kontaktfläche (5) des langgestreckten Blocks münden, wobei sich jeder Einschnitt (11) in einer schrägen Richtung in der ersten Seitenwand (7) und in der zweiten Seitenwand (9) mündend erstreckt,
**dadurch gekennzeichnet, dass** die Einschnitte (11) über die Kontaktfläche (5) des Blocks so verteilt sind, dass, wenn ein Einschnitt (11a) die zweite Seitenwand (9) erreicht, ein anderer Einschnitt (11b) um den Umfang neben dem Einschnitt (11a) auf gleicher Umfangshöhe (N) an dem langgestreckten Block (3) von der ersten Seitenwand (7) ausgeht, und dass die Einschnitte (11, 11a, 11b) Unterblöcke (8) in dem langgestreckten Block (3) begrenzen, wobei mindestens zwei dieser Unterblöcke (8) in dem Laufstreifen verschiedenen konfiguriert sind, und dass die Einschnitte (11, 11a, 11b) geradlinig auf der Kontaktfläche (5) des langgestreckten Blocks (3) sind, wobei jeder Einschnitt einen Winkel α mit einer Querrichtung (Y) bildet, und dass mindestens drei Einschnitte des langgestreckten Blocks (3) verschiedene Winkelwerte α1, α2, α3 haben, wobei diese Werte α1, α2, α3 zwischen 20° und 70° enthalten sind.

2. Laufstreifen nach Anspruch 1, **dadurch gekennzeichnet, dass** die Einschnitte (11) auf der Kontaktfläche (5) des Blocks (3) teilweise oder vollständig abgeschrägt sind.

## Claims

1. Tread for a tyre comprising at least one elongate block (3) of rubbery material of width W and length L with L>>W, this elongate block extending in a circumferential direction (X) when the tread (1) is mounted on the tyre, the elongate block (3) comprising a contact surface (5) intended to come into contact with the ground and a first lateral wall (7) and a second lateral wall (9) delimiting this contact surface (5), the elongate block (3) comprising a plurality of sipes (11, 11a, 11b) opening onto the contact surface (5) of the elongate block, each sipe (11) extending in an oblique direction opening onto the first lateral wall (7) and onto the second lateral wall (9), **characterized in that** the sipes (11) are distributed over the contact surface (5) of the block in such a way that when one sipe (11a) reaches the second lateral wall (9) another sipe (11b) circumferentially adjacent to said sipe (11a) starts out from the first lateral wall (7), at a same circumferential level (N) on the elongate block (3), and **in that,** with the sipes (11, 11a, 11b) delimiting sub-blocks (8) in the elongate block (3), at least two of these sub-blocks (8) are configured differently in the tread and **in that** the sipes (11, 11a, 11b) are rectilinear on the contact surface (5) of the elongate block (3), each sipe making an angle α with a transverse direction (Y), and **in that** at least three sipes of the elongate block (3) have different values of angle a. angle here adopts three values α1, α2, α3 with α1< α2< α3, these values α1, α2, α3 being comprised between 20° and 70°.

2. Tread according to Claim 1, **characterized in that** the sipes (11) are partially or fully chamfered on the contact surface (5) of the block (3).
